(19) Europäisches Patentamt
European Patent Office
Office européen des brevets

(11) Veröffentlichungsnummer: **0 119 956**
**A2**

# (12) EUROPÄISCHE PATENTANMELDUNG

(21) Anmeldenummer: **84810084.8**

(22) Anmeldetag: **16.02.84**

(51) Int. Cl.³: **C 09 B 1/48**, C 09 B 3/00, C 09 B 3/48, C 09 B 3/56, C 09 B 5/00, C 09 B 5/36

(30) Priorität: **22.02.83 CH 971/83**

(43) Veröffentlichungstag der Anmeldung: **26.09.84 Patentblatt 84/39**

(84) Benannte Vertragsstaaten: **CH DE FR GB LI**

(71) Anmelder: **CIBA-GEIGY AG, Postfach, CH-4002 Basel (CH)**

(72) Erfinder: **Linder, Raymond, Dr., Rennweg 98, CH-4052 Basel (CH)**
Erfinder: **Frey, Christian, Dr., Rebgasse 38, CH-4132 Muttenz (CH)**

(54) **Verfahren zur Herstellung von Küpenfarbstoffen.**

(57) Bei der Herstellung von Küpenfarbstoffen durch Kondensation von verküpbaren polycyclischen Verbindungen, welche eine primäre Aminogruppe aufweisen, mit aromatischen Halogenverbindungen in Anwesenheit eines Kupferkatalysators kommt man mit erheblich weniger Katalysator aus, wenn man diesen der Reaktionsmischung in mehreren Portionen zusetzt.

EP 0 119 956 A2

CIBA-GEIGY AG
Basel (Schweiz)

1-14331 /+

Verfahren zur Herstellung von Küpenfarbstoffen

Eine grosse Anzahl von Küpenfarbstoffen wird durch Kondensation einer verküpbaren polycyclischen Verbindung, welche eine primäre Aminogruppe aufweist, mit einer aromatischen Halogenverbindung hergestellt. Die Kondensation erfolgt in vielen Fällen bei erhöhter Temperatur und in Gegenwart einer Kupferverbindung. Diese wird üblicherweise vor Beginn der Reaktion der Reaktionsmischung zugesetzt.

Der vorliegenden Erfindung lag die Aufgabe zugrunde, die erforderliche Menge an Kupferkatalysator, der eine erhebliche ökologische und ökonomische Belastung darstellt, zu reduzieren.

Dies gelingt erfindungsgemäss dadurch, dass man den Kupferkatalysator nicht auf einmal zu Beginn der Reaktion zusetzt, sondern in mehreren Portionen über die Dauer der Reaktion verteilt. Ueberraschenderweise kommt man dabei mit erheblich geringeren Mengen, z.B. mit 1/4 der sonst benötigten Katalysatormenge, aus, was erhebliche Einsparungen insbesondere bei der Entfernung des Kupfers nach Beendigung der Reaktion mit sich bringt. In vielen Fällen ist ausserdem die erforderliche Reaktionszeit kürzer.

Gegenstand der vorliegenden Erfindung ist ein Verfahren zur Herstellung von Küpenfarbstoffen durch Kondensation von verküpbaren polycyclischen Verbindungen, welche mindestens eine primäre Aminogruppe aufweisen, mit aromatischen Halogenverbindungen in Anwesenheit eines Kupferkatalysators, welches dadurch gekennzeichnet ist, dass man den Kupferkatalysator der Reaktionsmischung in mehreren Portionen, verteilt auf die Reaktionsdauer, zusetzt.

Als verküpbare polycyclische Verbindungen mit mindestens einer primären Aminogruppe kommen die zur Herstellung von Küpenfarbstoffen gebräuchlichen Amine in Frage. Diese können die üblichen Substituenten tragen, wie z.B. Chlor, Brom, Alkyl, Alkoxy oder Acylamine, insbesondere Benzoylamino. Vorzugsweise handelt es sich um Aminoanthrachinon oder Aminoviolanthron, welche gegebenenfalls die erwähnten Substituenten tragen. Besonders bevorzugt sind 1-Aminoanthrachinon, 1,4-Diaminoanthrachinon, 1,5-Diaminoanthrachinon, 1-Amino-4-benzoylaminoanthrachinon, 1-Amino-5-benzoylaminoanthrachinon oder Aminoviolanthron. Es ist auch möglich, Mischungen aus zwei oder mehreren dieser Verbindungen einzusetzen.

Als aromatische Halogenverbindungen kommen solche in Frage, bei denen das Halogen direkt an den aromatischen Kern gebunden ist. Säurehalogenide von Aromaten oder Verbindungen, die sich ähnlich wie Säurehalogenide verhalten, wie z.B. Cyanurchlorid, sind nicht als aromatische Halogenverbindungen zu verstehen.

Besonders geeignet unter diesen sind halogeniertes, gegebenenfalls noch durch weitere bei Küpenfarbstoffen übliche Substituenten substituiertes Anthrachinon, Benzanthron, Anthanthron, Pyranthron, Dibenzanthron, Phthaloylacridon, Flavanthron, Dibenzpyrenchinon, Isoviolanthron oder ein halogeniertes Fluoranthen oder Alkylbenzol.

Bensonders gute Ergebnisse im erfindungsgemässen Verfahren werden erhalten, wenn man chloriertes oder bromiertes, gegebenenfalls durch Benzoylamino substituiertes Anthrachinon, Benzanthron, Anthanthron, Pyranthron, Dibenzanthron, Fluoranthen oder Alkylbenzol verwendet.

Die Halogenverbindung und die verküpbare Aminoverbindung werden im allgemeinen in etwa stöchiometrischen Mengen eingesetzt, ein Ueberschuss von z.B. 10% an einer der Komponenten ist jedoch ebenfalls möglich.

Die Umsetzung erfolgt zweckmässigerweise bei erhöhter Temperatur, vorzugsweise oberhalb 150°C in einem inerten Lösungsmittel, insbesondere in Nitrobenzol bei 180 bis 210°C.

Als Kupferkatalysator kommen Kupfer sowie Kupferverbindungen, wie z.B. Kupferoxid oder Kupferchlorid in Frage. Bevorzugt ist Kupfer(I)-chlorid.

Der Kupferkatalysator wird im erfindungsgemässen Verfahren der Reaktionsmischung in mehreren Portionen, verteilt auf die Reaktionsdauer, zugesetzt, wobei die Katalysatormenge pro Portion gleich bleiben kann, oder z.B. von der ersten zur letzten Portion zunehmen oder abnehmen kann. Es ist auch möglich, den Kupferkatalysator kontinuierlich während der gesamten Reaktion oder während einzelnen Phasen der Reaktion zuzusetzen. Diese Verfahrensvariante soll ebenfalls als "Zugabe in mehreren Portionen" verstanden werden. Bei heftig miteinander reagierenden Komponenten empfiehlt es sich, bei den ersten Portionen geringere Mengen einzusetzen als bei den folgenden. Vorzugsweise setzt man den Katalysator in 5 bis 20 gleichen Portionen zu, wobei die erste Portion zu Beginn der Reaktion und die restlichen Portionen danach in etwa gleichen Zeitabständen zugegeben werden. Die Kupferkatalysator kann in fester Form oder auch als Suspension, z.B. als Suspension in Nitrobenzol zugesetzt werden.

Eine bevorzugte Ausführungsform besteht darin, dass man die Umsetzung in Gegenwart eines Säureakzeptors durchführt.

Geeignete Säureakzeptoren sind z.B. Natrium- oder Kaliumhydrogencarbonat, -acetat oder -carbonat oder auch Mischungen dieser Verbindungen. Bevorzugt ist Natriumcarbonat.

Nach der Kondensationsreaktion wird der Farbstoff auf übliche Weise isoliert, beispielsweise indem man das Lösungsmittel durch Wasserdampfdestillation entfernt, danach den Farbstoff abfiltriert und trocknet.

In den nachfolgenden Beispielen bedeuten Teile Gewichtsteile und Prozente Gewichtsprozente. Die Temperaturen sind in Grad Celsius angegeben.

Beispiel 1

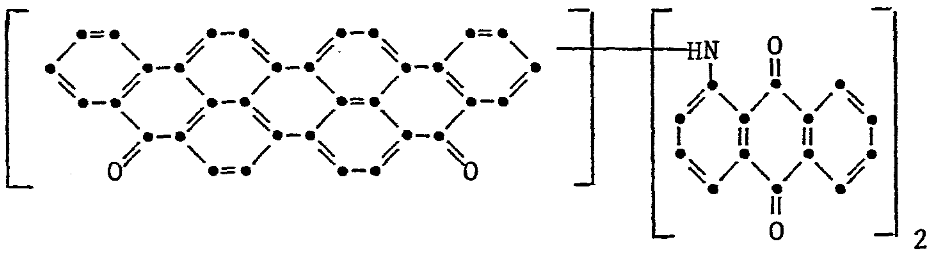

In 1800 Teile Nitrobenzol werden unter Rühren nacheinander 80 Teile wasserfreies Natriumcarbonat, 150 Teile bromiertes Dibenzanthron mit einem Bromgehalt von 29,1% und 95 Teile 1-Aminoanthrachinon eingetragen. Man erwärmt das Reaktionsgemisch auf 195 bis 205° und gibt in Abständen von jeweils 45 Minuten 7 Portionen von je 0,5 Teilen Kupfer-(I)-chlorid zu. Man rührt noch weitere 6 Stunden bei 195 bis 205°, lässt auf 80° abkühlen und entfernt anschliessend das Nitrobenzol durch eine Wasserdampfdestillation. Danach wird der Rückstand abfiltriert, mit heissem Wasser neutral und bromidfrei gewaschen und im Vakuum bei 100° getrocknet.

Man erhält 221 Teile Farbstoff, welcher Baumwolle grau bzw. schwarz färbt.

Vergleichsbeispiel

Arbeitet man wie im Beispiel 1 beschrieben, setzt jedoch das Kupfer-(I)-chlorid nicht portionenweise,sondern auf einmal vor Beginn der Kondensation zu, so sind ca. 14 Teile Kupfer-(I)-chlorid erforderlich, wenn die Reaktion in gleicher Zeit und bei gleicher Beschaffenheit des entstehenden Farbstoffes beendet sein soll.

Beispiel 2

In 1200 Teile Nitrobenzol werden unter Rühren 52,5 Teile Aminoviolanthron, 45 Teile Tetrabrompyranthron, 28 Teile 1-Aminoanthrachinon und 47 Teile wasserfreies Natriumcarbonat eingetragen. Man heizt auf 165 bis 170° auf und hält eine Stunde bei dieser Temperatur. Dann gibt man eine Suspension von 1,5 Teilen Kupfer-(I)-chlorid in 24 Teilen Nitrobenzol zu und heizt auf Siedetemperatur auf (ca. 212°). Nach Erreichen der Siedetemperatur und danach im Abstand von jeweils 1,5 Stunden setzt man noch weitere 9 Portionen von je 1,5 Teilen Kupfer-(I)-chlorid in 24 Teilen Nitrobenzol zu, wobei Siedetemperatur beibehalten bleibt. Man rührt noch weitere 1,5 Stunden bei dieser Temperatur, lässt abkühlen und isoliert den Farbstoff wie im Beispiel 1 beschrieben.

Nach Entkupferung durch Umfällung in Schwefelsäure erhält man 104 Teile Farbstoff, welcher Baumwolle schwarz bzw. grau färbt.

Beispiel 3

In 1900 Teilen Nitrobenzol werden unter Rühren 300 Teile 1-Aminoanthrachinon, 129 Teile wasserfreies Natriumcarbonat und 103,5 Teile 2,4-Dichlortoluol gegeben. Man heizt auf 210° auf und gibt insgesamt 6,6 Teile Kupfer-(I)-chlorid, suspendiert in 194 Teilen Nitrobenzol, im Verlauf von 21 Stunden in 18 Portionen zu. Danach hält man noch weitere 5 Stunden Siedetemperatur ein, kühlt auf 30° ab, filtriert und wäscht den Rückstand mit Nitrobenzol.

Man erhält 285 Teile Pigment, welches zur Spinnmassefärbung von Polyester in bordeauxroten Tönen geeignet ist.

Beispiele 4 bis 15

Arbeitet man wie im Beispiel 1 beschrieben, verwendet jedoch anstelle von bromiertem Dibenzanthron eine äquivalente Menge der in der folgenden Tabelle in Spalte 2 genannten Halogenverbindung und setzt diese mit der in Spalte 3 aufgeführten eine Aminogruppe aufweisenden Verbindung in etwa stöchiometrischer Menge um, so erhält man Küpenfarbstoffe, welche Baumwolle in der in Spalte 4 verzeichneten Nuance färben.

0119956

Tabelle

| Beispiel | Halogenverbindung | Verbindung mit Aminogruppe | Nuance |
|---|---|---|---|
| 4 | 1,5-Dichloranthrachinon | 1-Aminoanthrachinon | gelb |
| 5 | 3-Brombenzanthron | do | olive |
| 6 | 3,8-Dibrombenzanthron | do | olive |
| 7 | 1-Chloranthrachinon | do | olive |
| 8 | 3,x-Dichlorbenzanthron | do | grau |
| 9 | 3,8-Dibromfluoranthen | 1-Amino-4-benzoylamino-anthrachinon | braun |
| 10 | Dibromanthanthron | do | grau |
| 11 | 1,3-Dichlor-2-methyl-anthrachinon | do | grau |
| 12 | 1-Chloranthrachinon | 1,4-Diaminoanthrachinon | braun |
| 13 | 1-Chloranthrachinon + 1,5-Dichloranthrachinon | do | rot-braun |
| 14 | do | 1-Aminoanthrachinon + 1,5-Diaminoanthrachinon | gelb-braun |
| 15 | 1-Benzoylamino-4-brom-anthrachinon | 1-Amino-5-benzoylamino-anthrachinon | braun |

Beispiel 16

2 Teile des gemäss Beispiel 1 erhaltenen Farbstoffes werden mit 10 Volumteilen Natronlauge von 36°Bé und 5 Teilen Natriumhydrosulfit in 200 Teilen Wasser bei 50 bis 70° verrührt. Einem Färbebad, das in 2000 Teilen Wasser 5 Volumteile Natronlauge 36°Bé und 3,7 Teile Natriumhydrosulfit enthält, gibt man die obige Stammküpe zu und geht bei 40° mit 100 Teilen Baumwolle ein. Nach 10 Minuten gibt man 15 Teile Natriumchlorid zu, nach 20 Minuten weitere 15 Teile und färbt bei 40° während 45 Minuten. Hierauf wird die Baumwolle abgequetscht, oxidiert und wie üblich fertiggestellt. Sie ist in mittlerem klarem Grau mit sehr guten Echtheiten gefärbt.

Patentansprüche

1. Verfahren zur Herstellung von Küpenfarbstoffen durch Kondensation von verküpbaren polycyclischen Verbindungen, welche mindestens eine primäre Aminogruppe aufweisen, mit aromatischen Halogenverbindungen in Anwesenheit eines Kupferkatalysators, dadurch gekennzeichnet, dass man den Kupferkatalysator der Reaktionsmischung in mehreren Portionen, verteilt auf die Reaktionsdauer, zusetzt.

2. Verfahren gemäss Anspruch 1, dadurch gekennzeichnet, dass man als Verbindung mit einer primären Aminogruppe ein Aminoanthrachinon oder Aminoviolanthron einsetzt.

3. Verfahren gemäss Anspruch 2, dadurch gekennzeichnet, dass man 1-Aminoanthrachinon, 1,4-Diaminoanthrachinon, 1,5-Diaminoanthrachinon, 1-Amino-4-benzoylaminoanthrachinon, 1-Amino-5-benzoylaminoanthrachinon oder Aminoviolanthron einsetzt.

4. Verfahren gemäss eines der Ansprüche 1 bis 3, dadurch gekennzeichnet, dass man als Halogenverbindung eine halogenierte polycyclische Verbindung mit mindestens 3 Ringen oder ein halogeniertes Alkylbenzol verwendet.

5. Verfahren gemäss Anspruch 4, dadurch gekennzeichnet, dass man ein halogeniertes, gegebenenfalls noch durch weitere bei Küpenfarbstoffen übliche Substituenten substituiertes Anthrachinon, Benzanthron, Anthanthron, Pyranthron, Dibenzanthron, Phthaloylacridon, Flavanthron, Dibenzpyrenchinon, Isoviolanthron oder ein halogeniertes Fluoranthen oder Alkylbenzol verwendet.

6. Verfahren gemäss Anspruch 5, dadurch gekennzeichnet, dass man chloriertes oder bromiertes Anthrachinon, Benzanthron, Anthanthron, Pyranthron, Dibenzanthron, Fluoranthen oder Alkylbenzol, verwendet.

7. Verfahren gemäss einem der Ansprüche 1 bis 6, dadurch gekennzeichnet, dass man als Kupferkatalysator Kupfer oder vorzugsweise Kupfer-(I)-chlorid verwendet.

8. Verfahren gemäss einem der Ansprüche 1 bis 7, dadurch gekennzeichnet, dass man den Kupferkatalysator in 5 bis 20 gleichen Portionen zusetzt, wobei die erste Portion zu Beginn der Reaktion und die restlichen Portionen danach in etwa gleichen Zeitabständen zugegeben werden.